# EUROPEAN PATENT APPLICATION

(11) **EP 4 560 714 A1**
(43) Date of publication of application: **28.05.2025**
(21) Application number: 24192120.4
(22) Date of filing: 31.07.2024
(51) Int. Cl.: H01M 4/04, H01M 4/13, H01M 4/70

(54) **DRY ELECTRODE STRUCTURE AND METHOD OF MANUFACTURING THE SAME**

(30) Priority: 24.11.2023 KR 20230166107
(71) Applicant: SAMSUNG SDI CO., LTD., Giheung-gu Yongin-si, Gyeonggi-do 17084 (KR)
(72) Inventor: Lee, Seunghun, 17084 Yongin-si, Gyeonggi-do (KR); Park, Gwangwon, 17084 Yongin-si, Gyeonggi-do (KR); Jung, Daeun, 17084 Yongin-Si, Gyeonggi-do (KR); Lee, Miyoung, 17084 Yongin-Si, Gyeonggi-do (KR); Moon, Jeunggi, 17084 Yongin-si, Gyeonggi-do (KR); Lee, Jinhyon, 17084 Yongin-si, Gyeonggi-do (KR); Kim, Janghwan, 17084 Yongin-Si, Gyeonggi-do (KR)
(74) Representative: Gulde & Partner

(57) **Abstract**

Provided are a dry electrode structure and a method of manufacturing the same. An electrode structure may include an electrode substrate including a conductive material, a dry electrode portion bonded to the electrode substrate, and a bonding reinforcement portion on the electrode substrate to reinforce bonding force between the electrode substrate and the dry electrode portion.

## Description

### BACKGROUND

### 1. Field

Aspects of embodiments of the present disclosure relate to a dry electrode structure and a method of manufacturing the same.

### 2. Description of the Related Art

In general, dry electrodes are manufactured by a lamination process of joining an electrode substrate and an electrode film, which is formed by pressing an active material, a binder, and a conductive material into a film shape.

First, an electrode film is formed by mixing an active material, a conductive material, and a binder, in which the active material and the conductive material are bound with the fiberized binder. Afterwards, the electrode film is pressed onto an electrode substrate by a lamination process, thereby manufacturing a dry electrode.

In this case, a primer layer coating is formed on the electrode film or electrode substrate to reinforce the bonding between the electrode film and the electrode substrate. Thus, in a dry electrode of the related art, the primer layer coating is located between electrode film and the electrode substrate.

However, the primer layer coating is a component added to improve the bonding between the electrode film and the electrode substrate, regardless of the function or operation of the dry electrode, and may result in additional process costs and reduced efficiency.

Accordingly, it may be desirable to develop an electrode structure in which a dry electrode film and an electrode substrate are bonded together without a separate primer layer.

The above information disclosed in this Background section is for enhancement of understanding of the background of the present disclosure, and therefore may contain information that does not constitute related (or prior) art.

### SUMMARY

Aspects of embodiments of the present disclosure relate to a dry electrode structure for a secondary cell and a method of manufacturing the same.

Embodiments of the present disclosure provide an electrode structure in which an electrode substrate and a dry electrode are stably bonded to each other without an additional primer layer coating.

Furthermore, embodiments of the present disclosure provide a method of manufacturing the above electrode structure.

However, the present disclosure is not limited to the above, and other aspects not mentioned herein will be clearly understood by those skilled in the art from the description of the present disclosure below.

An electrode structure according to one or more embodiments of the present disclosure may include an electrode substrate including a conductive material, a dry electrode portion bonded to the electrode substrate, and a bonding reinforcement portion on the electrode substrate to reinforce bonding force between the electrode substrate and the dry electrode portion.

The bonding reinforcement portion may include recessed portions recessed downwardly from an upper surface of the electrode substrate to increase a contact area contacting the dry electrode portion.

The recessed portions may include concave portions provided in the upper surface of the electrode substrate, and convex portions protruding as compared to the concave portions.

The recessed portions may include trenches recessed downwardly from the upper surface of the electrode substrate, and remaining base material portions alternating with the trenches.

The recessed portions may have a depth of about 1 µm to about 5 µm, and a width of about 1 µm to about 5 µm. Further, the depth may be about 2 µm to about 4 µm or about 3 µm. The width may be about 2 µm to about 4 µm, or about 3 µm.

The bonding reinforcement portion may include protrusions protruding upwardly from an upper surface of the electrode substrate.

The protrusions may include a saw tooth shape, a column shape, a hemispherical shape, or a tree branch shape including branches branching from the column shape.

The protrusions may include electrolytic plated portions including a same material as the electrode substrate.

The protrusions may have a height of about 1 µm to about 5 µm, wherein a gap of about 1 µm to about 5 µm is between adjacent ones of the protrusions. Further, the height may be about 2 µm to about 4 µm or about 3 µm and the gap may be about 2 µm to about 4 µm or about 3 µm.

The dry electrode portion may include a dry electrode film produced by a dry electrode process without a dispersant for dispersing an active material, a conductive material, or a binder.

The dry electrode portion may include a negative active material, wherein the electrode substrate and the bonding reinforcement portion include a thin copper film, a nickel thin film, a stainless-steel thin film, a titanium thin film, a nickel foam, a copper foam, a polymer substrate coated with a conductive metal, or a combination thereof.

The dry electrode portion may include a positive active material, wherein the electrode substrate and the bonding reinforcement portion include aluminum.

A method of manufacturing an electrode structure according to one or more embodiments of the present disclosure may include preparing an electrode substrate, forming a bonding reinforcement portion for reinforcing bonding force of the electrode substrate by processing an upper surface of the electrode substrate, and bonding a dry electrode portion onto the electrode substrate in direct contact with the bonding reinforcement portion.

The forming of the bonding reinforcement portion may include forming plating seeds on the upper surface of the electrode substrate, and forming protrusions having a plating height from the upper surface by precipitating a plating metal material on the plating seeds by a plating process.

Adjacent ones of the plating seeds may have a gap of about 1 µm to about 5 µm. Further, the gap may be about 2 µm to about 4 µm or about 3 µm.

The plating height may be about 1 µm to about 5 µm. Further, the plating height may be about 2 µm to about 4 µm or about 3 µm.

The forming of the bonding reinforcement portion may include forming a mask pattern on the upper surface of the electrode substrate, forming trenches having a line shape and spaced apart a gap from each other by partially removing the electrode substrate by an etching process using the mask pattern as an etching mask, and forming a line pattern including the trenches and remaining substrate portions by removing the mask pattern from the electrode substrate.

The forming of the mask pattern may include forming a photoresist film on the electrode substrate, performing an exposure process to the photoresist film to have the line shape, and developing the photoresist film.

The method may further include forming the dry electrode portion by repeating a calendaring process on electrode powder in which an electrode active material, a conductive material, and a binder are mixed.

The bonding of the dry electrode portion onto the electrode substrate may include a laminating process of thermally pressing the electrode substrate and the dry electrode portion by feeding the electrode substrate and the dry electrode portion between a pair of lamination rollers.

According to embodiments of the disclosure, even if an additional bonding layer, such as a primer layer, is omitted, the electrode portion and the electrode substrate may be firmly bonded by reinforcing the bonding force between the electrode portion and the electrode substrate by using the bonding reinforcement portion located on the electrode substrate. Accordingly, stability may be improved while primer-layer-coating costs are reduced in the manufacturing process of the dry electrode structure.

The dry electrode substrate may correspond to a current collector for a Li secondary cell, and the dry electrode portion may include an active material for the Li secondary cell.

However, aspects of the present disclosure are not limited to those described above, and other aspects not mentioned will be clearly understood by a person skilled in the art from the detailed description, described below.

### BRIEF DESCRIPTION OF THE DRAWINGS

The following drawings attached to this specification illustrate embodiments of the present disclosure, and further describe aspects of the present disclosure together with the detailed description of the present disclosure. Thus, the present disclosure should not be construed as being limited to the drawings:
FIG. 1 illustrates a dry electrode structure for a secondary cell according to embodiments of the present disclosure;
FIG. 2 illustrates one or more other embodiments of the recessed portion shown in FIG. 1;
FIG. 3 illustrates a bonding reinforcement portion according to one or more other embodiments of the present disclosure;
FIGS. 4 to 6 illustrate shapes of the protrusions illustrated in FIG. 3 according to one or more other embodiments of the present disclosure;
FIG. 7 schematically illustrates a calendar apparatus for forming an electrode layer as shown in FIG. 1;
FIG. 8 illustrates a flowchart showing a method of manufacturing the electrode structure illustrated in FIG. 1;
FIG. 9 illustrates a flowchart showing a method of forming the bonding reinforcement portion by an electrolytic-plating process;
FIG. 10 illustrates a scanning electron microscope (SEM) image showing the electrode substrate in which the protrusions are formed by the electrolytic-plating process shown in FIG. 9;
FIG. 11 illustrates a flowchart showing a method of forming the bonding reinforcement portion by an etching process;
FIG. 12 schematically illustrates a laminating apparatus for manufacturing the electrode structure shown in FIG. 1; and
FIG. 13 illustrates a SEM image showing a state in which the electrode portion is pressed to the electrode substrate illustrated in FIG. 10 by the laminating process.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases, such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of 35 U.S.C. § 112(a) and 35 U.S.C. § 132(a).

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may contact the upper (or lower) surface of the element, and another element may also be interposed between the element and the arbitrary element located on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

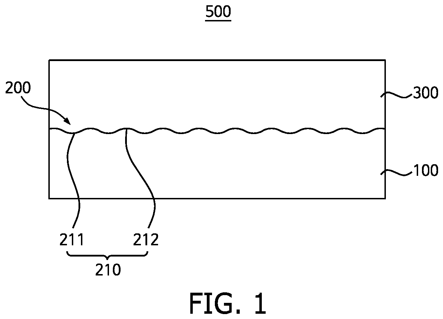

FIG. 1 illustrates a dry electrode structure for a secondary cell according to embodiments of the present disclosure.

Referring to FIG. 1, a dry electrode structure 500 according to embodiments of the present disclosure may include an electrode substrate 100, a bonding reinforcement portion 200 located on the electrode substrate 100, and an electrode portion 300 bonded to the electrode substrate 100.

In some embodiments, the electrode substrate 100 may include a material not causing a substantial chemical change in a cell, and having high conductivity.

For example, the electrode substrate 100 may include stainless steel, aluminum (Al), nickel (Ni), titanium (Ti), calcined carbon, copper (Cu), or a composite material in which Al or stainless steel is surface treated with carbon (C), Ni, Ti, silver (Ag), or the like. It will be appreciated that the electrode substrate 100 may be provided variously depending on the polarity of the dry electrode structures 500.

For example, the thickness of the electrode substrate 100 may range from about 10 µm to about 50 µm (e.g., from about 10 µm about 20 µm). However, this is illustrative, and the electrode substrate 100 may be provided in various thicknesses depending on the process characteristics of the electrode structure 500, or depending on the characteristics of a cell or an energy storage device manufactured using the electrode structure 500.

In some embodiments, the bonding reinforcement portion 200 is arranged on the upper surface of the electrode substrate 100 to reinforce bonding force between the electrode portion 300 and the electrode substrate 100.

For example, the bonding reinforcement portion 200 may include a plurality of recessed portions 210 recessed downwardly from the upper surface of the electrode substrate 100 to increase a contact area of the electrode substrate 100 contacting the electrode portion 300.

The surface of the electrode substrate 100 is recessed so that the contact area contacting the electrode portion 300 is increased by side surfaces of the recessed portions 210. Frictional force generated from the side surfaces of the recessed portions 210 by the contact with the electrode portion 300 may reinforce the bonding force between the electrode substrate 100 and the electrode portion 300.

For example, the recessed portions 210 include a plurality of concave portions 211 arranged in the upper surface of the electrode substrate 100, and convex portions 212 formed of relatively non-recessed surface portions of the electrode substrate 100. The recessed portions 210 are provided as a textured pattern including the concave portions 211 and the convex portions 212.

Irregular textures may be formed on the upper surface by spraying or projecting fine solid particles to the surface of the electrode substrate 100 by sand blasting. In response to irregular collision of solid particles with the upper surface of the electrode substrate 100, the concave portions 211 are irregularly arranged, and the convex portions 212 are relatively formed of the surface portions of the electrode substrate 100 in which none of the concave portions 211 are located. The concave portions 211 and the convex portions 212 irregularly arranged in the upper surface of the electrode substrate 100 may increase the surface area of the upper surface of the electrode substrate 100, and may increase the contact area contacting

The concave portions 211 each may have a depth of about 1 µm to about 5 µm. If the depth of the concave portions 211 is lower than about 1 µm, the surface area increased by the concave portions 211 might not be significant/sufficient, and it may be difficult to obtain a bonding force enhancement effect. If the depth of the concave portions 211 is higher than about 5 µm, the electrode substrate 100 may have reduced flexibility and increased brittleness, and may increase the breakage rate of the electrode structure 500 in the subsequent process.

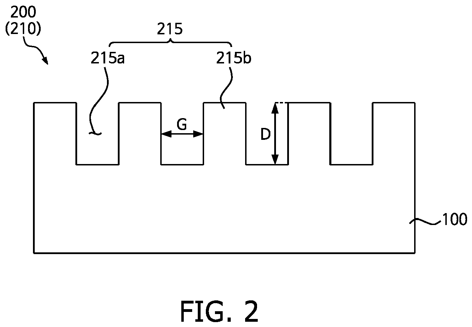

FIG. 2 illustrates one or more other embodiments of the recessed portion shown in FIG. 1.

Referring to FIG. 2, the recessed portions 210 may include a line pattern 215 including a plurality of line-shaped trenches 215a recessed downwardly from the upper surface of the electrode substrate 100, and a plurality of remaining base material portions 215b alternating with the trenches 215a and not recessed to be defined by the trenches 215a.

If the line-shaped trenches 215a are formed in, or defined by, the upper surface of the electrode substrate 100 in a direction (e.g., predetermined direction), a portion of the upper surface of the electrode substrate 100 defined by a pair of adjacent trenches 215a remains (e.g., in the shape of a line in the same direction of the initial electrode substrate). The trenches 215a and the remaining base material portions 215b are alternately located to form the overall line pattern 215.

In one or more embodiments, the trenches 215a each may have a depth D of about 1 µm to about 5 µm, and the gap G between adjacent remaining base material portions 215b (e.g., a width of one of the trenches 215a) may range from about 1 µm to about 5 µm. In one or more embodiments, the width of the remaining base material portions 215b may be set to a range of about 1 µm to about 5 µm.

For example, the line pattern 215 may be formed by performing dry etching or wet etching to the electrode substrate.

The bonding reinforcement portion 200 may increase the contact area not only by the recesses recessed downwardly from the upper surface of the electrode substrate 100, but also by protrusions protruding upwardly.

A plurality of protrusions 250 protruding upwardly to increase the contact area contacting the electrode portion 300 may be provided.

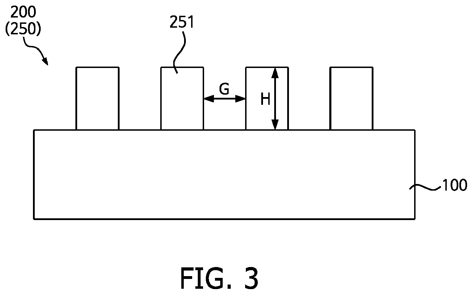

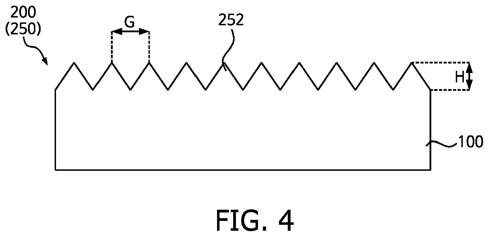

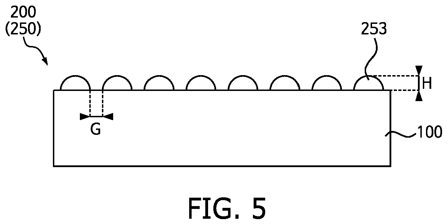

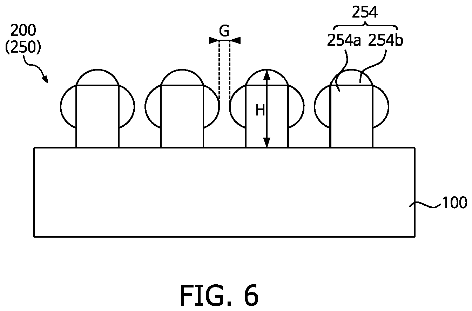

FIG. 3 illustrates a bonding reinforcement portion according to one or more other embodiments of the present disclosure. FIGS. 4 to 6 illustrate shapes of the protrusions illustrated in FIG. 3.

Referring to FIGS. 3, 4, 5, and 6, the protrusions 250 may protrude upwardly from the upper surface of the electrode substrate 100 to increase the contact area contacting the electrode portion 300.

The protrusions 250 may have a variety of shapes formed by different processes, as long as the protrusions 250 have a protrusion height H (e.g., predetermined protrusion height) from the upper surface of the electrode substrate 100, and are strong enough not to be recessed by the electrode portion 300 during a laminating process.

For example, the protrusions 250 may include column-shaped protrusions 251 having the shape of columns formed by deposition, patterning, or electrolytic plating, may include saw-shaped protrusions 252 having the shape of saw teeth, may include hemispherical protrusions 253 having the shape of hemispheres, or may include tree branch-shaped protrusions 254 having the shape of splayed tree branches. However, the above are merely examples, and protrusions 250 may be provided in a variety of shapes as long as the stability of the bonding between electrode portion 300 and electrode substrate 100 may be increased.

The protrusions 250 may be implemented as electrolytic plated portions formed by electrolytic plating. The electrolytic plated portions include the same material as the electrode substrate 100 for uniformity of plating.

If the electrode portion 300 includes a negative active material, and if the electrode substrate 100 includes copper (Cu), the protrusions 250 may include Cu. If the electrode portion 300 includes a positive active material, and if the electrode substrate 100 includes aluminum (Al), the protrusions 250 may include Al.

In one or more embodiments, the protrusions 250 are configured to suitably penetrate the electrode portion 300 in the laminating process so that the side surfaces of the protusions 250 may be in sufficient contact with the electrode portion 300.

The height H and the gap G of each of the protrusions 250 are respectively set to the range of about 1 µm to about 5 µm. If the height of the protrusions 250 is lower than about 1 µm, the contact area between the protrusions 250 and the electrode portion 300 is not sufficient, and effective frictional force may not be suitably generated. If the height of the protrusions 250 is higher than about 5 µm, the protrusions 250 may be vulnerable to buckling, and may be bent before penetrating the electrode portion 300. The protrusions 250 may not have a sufficient contact area contacting the electrode portion 300.

If the gap of the protrusions 250 (e.g., the gap between the protrusions) is smaller than about 1 µm, the contact area between the protrusions 250 and the electrode substrate 100 may not be sufficient, and the electrode portion 300 may not be suitably pressed to the electrode substrate 100 during the laminating process. If the gap of the protrusions 250 is greater than about 5 µm, the gap of the adjacent protrusions 250 is too wide, and the protrusions 250 may slip, and may be bent while being fitted into the electrode portion 300.

The height H and the gap of each of the protrusions 250 are respectively set to a range of about 1 µm to about 5 µm.

The column-shaped protrusions 251 having the uniform height H and the same gap G may be arranged in the form of a matrix in the upper surface of the electrode substrate 100. The electrode portion 300 contacts the column-shaped protrusions 251, may be fixed by frictional force, and may be pressed to the portions of the upper surface of the electrode substrate 100 between the column-shaped protrusions 251 by compressive force. The electrode portion 300 may be sufficiently firmly bonded to the electrode substrate 100 by compressive force and frictional force even without a separate bonding layer.

The saw-shaped protrusions 252 may improve penetration characteristics into the electrode portion 300, as compared to the column-shaped protrusions 251. In one or more embodiments, the hemispherical protrusions 253 may be configured to substantially cancel horizontal components of frictional force, so that effectively only a vertical component directed toward the electrode substrate 100 may act. Compared to the column-shaped protrusions 251, slip caused by shearing force between the electrode substrate 100 and the electrode portion 300 may be reduced or minimized, and bonding stability may be improved.

Each of the tree branch-shaped protrusions 254 may include a body 254a having substantially the same configuration as each of the column-shaped protrusions 251, and branches 254b branching upwardly and/or laterally from the body 254a. Each of the tree branch-shaped protrusions 254 is implemented as a composite protrusion in which a column-shaped protrusion 251 and hemispherical protrusions 253 are combined.

The body 254a may be provided as a base for supporting the branches 254b, and the branches 254b may extend in the shape of hemispheres from the upper portion of the body 254a to increase the surface area.

In the lower portion of the body 254a, the side surface of the body 254a contacts the electrode portion 300. In the upper portion of the body 254a, the branches 254b contact the electrode portion 300. The surface area of the tree branch-shaped protrusion 254 may be further increased to be greater than that of the column-shaped protrusion 251.

Setting the gap between the adjacent branches 254b as the gap between the adjacent tree branch-shaped protrusions 254 is disclosed, but this is merely illustrative. The gap between the adjacent bodies 254a may be set as the gap between the tree branch-shaped protrusions 254, as the column-shaped protrusions 251.

In one or more embodiments, the branches 254b of the tree branch-shaped protrusions 254 may have a hemispherical shape, but the branches 254b may be configured to have a saw tooth shape, or may be implemented as beam-shaped frames. The shape of the branches 254b may be suitably modified according to the aspect of penetration into the bonded electrode portion 300 and according to the structure of generating frictional force together with the electrode portion 300.

In some embodiments, the electrode portion 300 includes a dry electrode layer including an active material, a conductive material, and a binder.

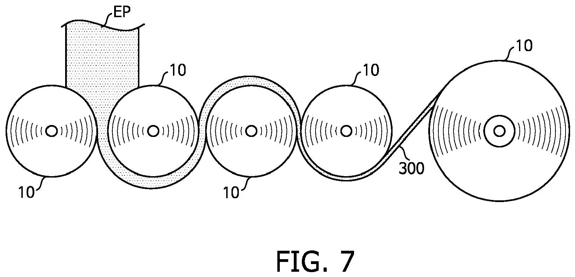

FIG. 7 schematically illustrates a calendar apparatus for forming an electrode layer as shown in FIG. 1.

Referring to FIG. 7, electrode powder EP including at least one of an electrode active material, a binder resin, and/or a conductive material is formed into an electrode portion 300 having a thickness (e.g., predetermined thickness while passing between press rollers 10. The press rollers 10 are implemented as a plurality of roller pairs having different gaps, and are configured so that the thickness of the electrode portion is gradually reduced while moving from a pair of press rollers 10 having a wider gap to another pair of press rollers 10 having a narrower gap.

For example, the electrode portion 300 may have the shape of a sheet, a strip, or a film.

For example, the electrode portion 300 is implemented as a dry electrode layer manufactured by a dry process in which a dispersant for dispersing electrode components, such as an active material, a conductive material, and/or a binder, is not used. The electrode powder EP may be ground without a dispersing solvent to be provided as powder, and may be formed into the electrode portion 300 under high pressure applied by the press rollers 10. For example, the electrode portion 300 may be provided as a dry electrode film.

The electrode portion 300 may be inserted into a laminating apparatus, described below, from which the electrode portion 300 is supplied to the electrode substrate 100 including the bonding reinforcement portion 200 to be thermally pressed thereto. The electrode portion 300 may be pressed and bonded to the electrode substrate 100, and bonding force may be reinforced by frictional force applied from the bonding reinforcement portion 200, and the electrode structure 500 in which the electrode portion 300 and the electrode substrate 100 are firmly bonded is formed.

The electrode structure 500 may be used as an electrode plate of a variety of cells that generate current by chemical reactions. For example, the electrode structure 500 may be used in a primary cell, a secondary cell, a fuel cell, a photovoltaic cell, a capacitor, or the like. The secondary cell may include a lithium (Li) ion cell in which Li ions act as an ion conductor.

For example, in the related art, a primer layer including a bonding component is formed on the electrode substrate 100 or the electrode portion 300 by a separate process to bond the electrode portion 300 manufactured by the dry process to the electrode substrate 100, but in the present disclosure, the bonding force between the electrode portion 300 and the electrode substrate 100 may be reinforced by the bonding reinforcement portion 200 located on the electrode substrate 100, and may allow the electrode portion 300 and the electrode substrate 100 to be firmly joined, even if the primer layer is omitted, and primer-layer-coating costs in the manufacturing process of the dry electrode structure 500 may be reduced.

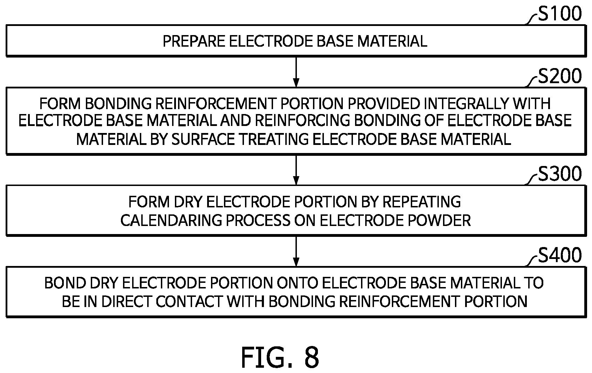

FIG. 8 illustrates a flowchart showing a method of manufacturing the electrode structure illustrated in FIG. 1.

Hereinafter, the method of manufacturing the electrode structure shown in FIGS. 1 to 7 will be disclosed. The same reference numerals will be used to designate the same components as those in FIGS. 1 to 7, and repeated descriptions thereof will be omitted.

Referring to FIG. 8, first, an electrode substrate is prepared to form the electrode structure 500 shown in FIG. 1 in operation S100.

The electrode substrate 100 may be suitably selected according to the type of the electrode active material of the electrode portion 300 bonded as a conductive plate. A Cu plate may be prepared for the electrode substrate 100 bonded to the electrode portion 300 including a negative active material, and an Al plate may be prepared for the electrode substrate 100 bonded to the electrode portion 300 including a positive active material.

Subsequently, the prepared electrode substrate 100 may be processed to form the bonding reinforcement portion 200 on the upper surface thereof in operation S200. For example, the bonding reinforcement portion 200 may be formed by an electrolytic-plating process.

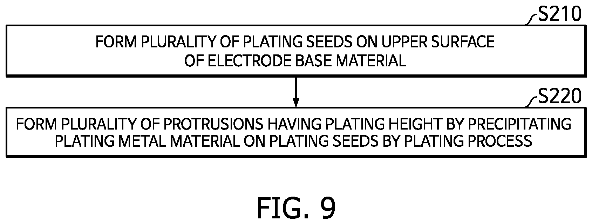

FIG. 9 illustrates a flowchart showing a method of forming the bonding reinforcement portion by an electrolytic-plating process.

Referring to FIG. 9, first, a plurality of plating seeds may be formed on the upper surface of the electrode substrate 100 in operation S210.

The plating seeds may be portions functioning as an anode during electrolytic plating, may be areas in which a plating metal precipitates, and may include the same material as the plating metal.

For example, the plating seeds having the shape of a metal pad may be formed on the upper surface of the electrode substrate 100 in the form of a matrix by patterning a metal film including the same material as the plating metal. Because the plating is performed by accumulative precipitation, the bonding reinforcement portion 200 may grow upwardly from the plating seeds.

Setting a plating gap of the plating seeds may cause the gap of the bonding reinforcement portion 200 formed by growth from the plating seeds to be also set according to the plating gap. By suitably setting the plating gap of the plating seeds, the gap of the bonding reinforcement portion 200 formed in the subsequent plating process may be controlled.

For example, the plating seeds may be formed on the electrode substrate 100 to have the plating gap of about 1 µm to about 5 µm.

The plating seeds may include the same material as the electrode substrate 100. For example, if the electrode substrate 100 includes Cu, the plating seeds may also include Cu to obtain uniformity, and to reduce or prevent the likelihood of breakage caused by the difference in physical properties between the electrode substrate 100 and the bonding reinforcement portion 200.

Afterwards, the plating metal material may be grown from the plating seeds by performing the plating process, and may form the protrusions 250 having the plating height H (e.g., predetermined plating height) from the upper surface in operation S220.

For example, the electrode substrate 100 including the plating seeds is immersed in an electrolytic solution dissolved with plating metal ions, and current is applied thereto. Plating ions electrochemically separated from the electrolytic solution precipitate on the plating seeds.

In one or more embodiments, the thickness and shape of the precipitated plating may be controlled by adjusting the applied voltage or current, the type of the electrolytic solution, the concentration of the electrolytic solution, the concentration of the transport ions (pH), and/or the like.

Protrusions 251, 252, 253, and 254 having various shapes respectively shown in FIGS. 3, 4, 5, and 6 may be formed on the upper surface of the electrode substrate 100, and the bonding reinforcement portion 200 growing from the plating seeds may be formed.

For example, the height of the protrusions 250 of the bonding reinforcement portion 200 protruding from the electrode substrate 100 may be controlled by adjusting the amount of the plating metal precipitating on the plating seeds.
The protrusions 250 may be grown to have the plating height of about 1 µm to about 5 µm from the upper surface.

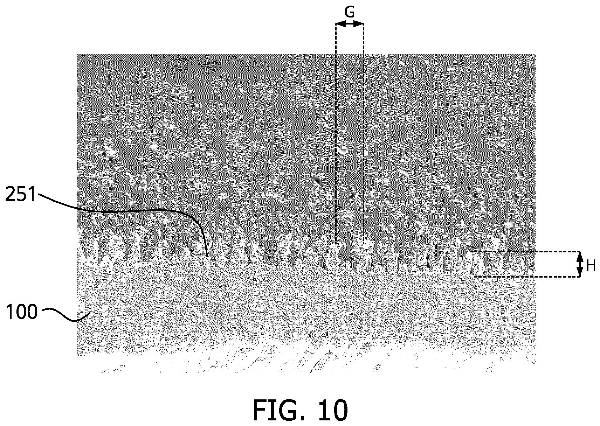

FIG. 10 illustrates a scanning electron microscope (SEM) image showing the electrode substrate in which the protrusions are formed by the electrolytic-plating process shown in FIG. 9.

Referring to FIG. 10, the column-shaped protrusions 251 having a gap G (e.g., predetermined gap) and a height H (e.g., predetermined height) are formed on the upper surface of the electrode substrate 100 as a result of the electrolytic plating.

As described above, the electrode substrate 100 may have a thickness of about 10 µm to about 50 µm, and the column-shaped protrusions 251 may be formed on the entire upper surface of the electrode substrate 100 in the form of a matrix to have a gap G and a height H of about 1 µm to about 5 µm.

The SEM image illustrated in FIG. 10 shows the column-shaped protrusions 251 including Cu formed on the upper surface of the electrode substrate 100 including Cu. However, this is illustrative, and the column-shaped protrusions 251 including AI may also be formed on the upper surface of the electrode substrate 100 including Al.

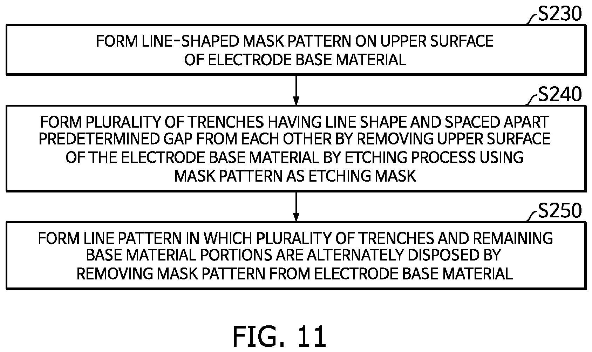

FIG. 11 illustrates a flowchart showing a method of forming the bonding reinforcement portion by an etching process.

Referring to FIG. 11, first, a line-shaped mask pattern is formed on the surface of the electrode substrate 100 in operation S230.

For example, after a photoresist film is formed on the electrode substrate 100, the mask pattern may be formed by an exposure process.

After the electrode substrate 100 is loaded into a deposition chamber, the photoresist film may be formed by depositing a photoresist at a uniform concentration. The electrode substrate 100 including the photoresist film may be loaded into an exposure device, and may be subjected to an exposure process using a reticle having a line-shaped exposure area.

In one or more embodiments, the exposed area is dissolved into a sol and the unexposed area may remain as the photoresist film. The portion of the photoresist film dissolved into the sol may be removed by a development process, and may obtain a photoresist pattern having a line shape.

The photoresist pattern may be used as a mask pattern in the subsequent etching process.

Subsequently, the etching process using the mask pattern as an etching mask may remove the electrode substrate 100 exposed through the mask pattern to a depth (e.g., predetermined depth), and may form trenches in operation S240.

In one or more embodiments, the trenches 215a having the depth (e.g., predetermined depth), and spaced apart a regular gap from each other in a direction perpendicular to the direction of extension, may be formed in the upper surface of the electrode substrate 100.

Afterwards, the mask pattern may be removed from the electrode substrate 100, and remaining base material portions 215b defined by the trenches 215a may be formed.

The area of the electrode substrate 100 covered with the mask pattern and not removed in the etching process is formed as the remaining base material portions 215b each located between the adjacent trenches 215a. Both side portions of the remaining base material portions 215b are defined by the trenches 215a, and the trenches 215a and the remaining base material portions 215b are alternately located.

In one or more embodiments, the line pattern 215 in which the trenches 215a having the depth (e.g., predetermined depth), and in which the remaining base material portions 215b are alternately located, is formed in the upper surface of the electrode substrate 100.

The trenches 215a may be formed to have the depth D of about 1 µm to about 5 µm.

Subsequently, the dry electrode portion 300 is formed by repeating a calendaring process on the electrode powder EP in which an electrode active material, a conductive material, and a binder are mixed in operation S300 (e.g., see FIG. 8).

The film-shaped electrode portion 300 may be formed using the calendar apparatus as described above with reference to FIG. 7.

The electrode powder EP is formed into the electrode portion 300 having a thickness (e.g., predetermined thickness) by passing between the press rollers 10. The press rollers 10 may be implemented as a plurality of roller pairs having different gaps, and may be configured so that the thickness of the electrode portion is gradually reduced while moving from a pair of press rollers 10 having a wider gap to another pair of press rollers 10 having a narrower gap.

For example, the electrode portion 300 is implemented as a dry electrode layer manufactured by a dry process in which a dispersant for dispersing electrode components, such as an active material, a conductive material, and/or a binder, is not used. The electrode powder EP may be ground without a dispersing solvent to be provided as powder, and may be formed into the electrode portion 300 under high pressure applied by the press rollers 10. For example, the electrode portion 300 may be provided as a dry electrode film.

Afterwards, the dry electrode portion 300 is bonded onto the electrode substrate 100 to be in direct contact with the bonding reinforcement portion 200 in operation S400 (e.g., see FIG. 8).

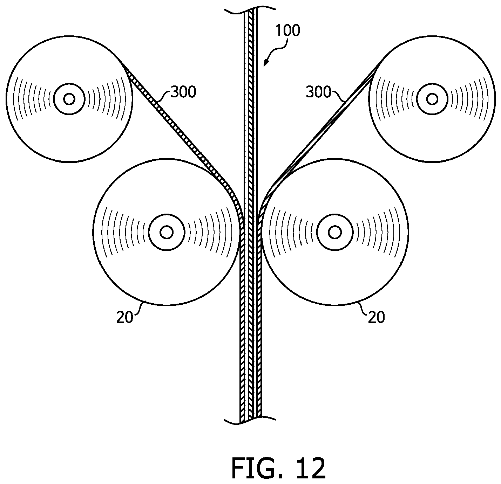

FIG. 12 schematically illustrates a laminating apparatus for manufacturing the electrode structure shown in FIG. 1.

The electrode substrate 100 and the electrode portion 300 may be thermally pressed using the laminating apparatus illustrated in FIG. 12.

First, by feeding the electrode substrate 100, which includes the bonding reinforcement portion 200, and the dry electrode portion 300 to pass between a pair of lamination rollers 20, the bonding reinforcement portion 200 is pressed to penetrate the electrode active material.

The electrode substrate 100 may be supplied from a first supply end to feed between the lamination rollers 20, and the dry electrode portions 300 may be supplied from a pair of second supply ends to be respectively pressed to the upper and lower surfaces of the electrode substrate 100.

The bonding reinforcement portions 200, as described above, are respectively formed on the upper and lower surfaces of the electrode substrate 100, and the electrode portion 300 may be pressed by the lamination rollers 20 so that the bonding reinforcement portion 200 penetrates the electrode portion 300.

In one or more embodiments, unlike the laminating process of the related art, in which the bonding layer, such as a primer layer, is located between the electrode portion and the electrode substrate, the electrode portions 300 and the electrode substrate 100 according to the present disclosure may be pressed under lower pressure because no bonding layer is provided.

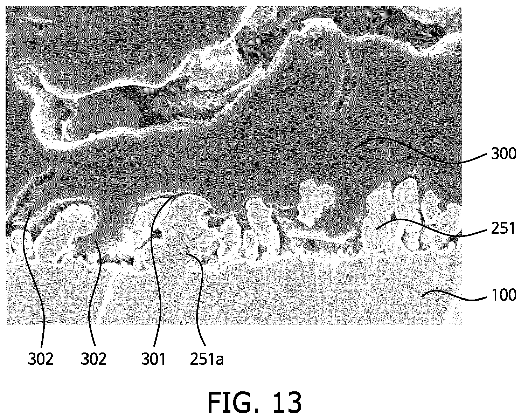

FIG. 13 illustrates a SEM image showing a state in which the electrode portion is pressed to the electrode substrate illustrated in FIG. 10 by the laminating process.

As shown in FIG. 13, if the electrode portion 300 is pressed to the electrode substrate 100 having the column-shaped protrusions 251 shown in FIG. 10, the column-shaped protrusions 251 may penetrate into the active material of the electrode portion 300 to surround the side surfaces of the bonding reinforcement portion 200. In one or more embodiments, the column-shaped protrusions 251 may be partially deformed by pressing force to the extent that there is no damage, and may be combined or inclined. For example, portions of the adjacent column-shaped protrusions 251 may be inclined toward each other to form a combined protrusion 251a, and the upper surface may be increased by the combining. The electrode portion 300 contacting the upper surface of the combined protrusion 251a may include a horizontally extending flat portion 301, and may have increased frictional force in the flat portion 301 in which the contact area is increased.

In one or more embodiments, the gap G between the combined protrusion 251a and an adjacent column-shaped protrusion 251 may be increased from the gap before the combining. The electrode portion 300 may include an extension 302, which is sufficiently inserted through the increased gap, to contact the column-shaped protrusion 251 defining the increased gap and the side surface of the combined protrusion 251a.

In one or more embodiments, the electrode portion 300 may contact the side surfaces of the combined protrusion 251a and the column-shaped protrusion 251, which are between the combined protrusion 251a and the column-shaped protrusion 251, to increase the frictional force.

While the electrode substrate 100 and the electrode portion 300 are being pressed, the lamination rollers 20 may be heated so that the electrode substrate 100 and the electrode portion 300 may be heated using the lamination rollers 20. The electrode substrate 100 and the electrode portion 300 may be bonded by thermal pressing.

In one or more embodiments, the lamination rollers initially of about 20°C may be heated in a temperature range of about 25°C to about 150°C. For example, because the primer layer coating is not located between the electrode substrate 100 and the electrode portion 300, heat transfer between the electrode substrate 100 and the electrode portion 300 may be more efficiently performed. Compared to the laminating process of the related art in which the primer layer coating is located, the temperature of the lamination rollers 20 may be maintained relatively lower.

In one or more embodiments, the electrode structure 500 illustrated in FIG. 1 may be manufactured.

Although a separate bonding layer is not provided between the electrode substrate 100 and the dry electrode portion 300, the electrode substrate 100 and the dry electrode portion 300 may be firmly bonded by the frictional force of the bonding reinforcement portion 200 provided on the electrode substrate 100, and the stability of the electrode structure 500 may be improved.

According to the electrode structure and the method of manufacturing the same as described above, even if an additional bonding layer, such as a primer layer, is omitted, the electrode portion 300 and the electrode substrate 100 may be firmly joined by reinforcing the bonding force between the electrode portion 300 and the electrode substrate 100 using the bonding reinforcement portion 200 located on the electrode substrate 100, and stability may be improved while primer-layer-coating costs are reduced in the manufacturing process of the dry electrode structure 500.

The dry electrode substrate may correspond to a current collector for a Li secondary cell, and the dry electrode portion may include an active material for the Li secondary cell.

Although the present disclosure has been described above with respect to embodiments thereof, the present disclosure is not limited thereto. Various modifications and variations can be made thereto by those skilled in the art within the scope of the appended claims.

## Claims

1. An electrode structure comprising:
an electrode substrate (100) comprising a conductive material;
a dry electrode portion (300) bonded to the electrode substrate; and
a bonding reinforcement portion (200) on the electrode substrate to reinforce bonding force between the electrode substrate and the dry electrode portion.

2. The electrode structure as claimed in claim 1, wherein the bonding reinforcement portion (200) comprises recessed portions (210) recessed downwardly from an upper surface of the electrode substrate to increase a contact area contacting the dry electrode portion.

3. The electrode structure as claimed in claim 2, wherein the recessed portions (210) comprise concave portions provided in the upper surface of the electrode substrate, and convex portions protruding as compared to the concave portions.

4. The electrode structure as claimed in claim 2 or 3, wherein the recessed portions (210) comprise trenches recessed downwardly from the upper surface of the electrode substrate, and remaining base material portions alternating with the trenches, and/or wherein the recessed portions (210) have a depth of 1 µm to 5 µm, and a width of 1 µm to 5 µm.

5. The electrode structure as claimed in any of claims 1 to 3, wherein the bonding reinforcement portion (200) comprises protrusions (250) protruding upwardly from an upper surface of the electrode substrate.

6. The electrode structure as claimed in claim 5, wherein the protrusions (250) comprise a saw tooth shape, a column shape, a hemispherical shape, or a tree branch shape comprising branches branching from the column shape, and/or wherein the protrusions comprise electrolytic plated portions comprising a same material as the electrode substrate.

7. The electrode structure as claimed in claim 5 or 6, wherein the protrusions (250) have a height of 1 µm to 5 µm, and
wherein a gap of 1 µm to 5 µm is between adjacent ones of the protrusions.

8. The electrode structure as claimed in any of the preceding claims, wherein the dry electrode portion (300) comprises a dry electrode film produced by a dry electrode process without a dispersant for dispersing an active material, a conductive material, or a binder.

9. The electrode structure as claimed in claim 8, wherein the dry electrode portion (300) comprises a negative active material, and
wherein the electrode substrate (100) and the bonding reinforcement portion (200) comprise a thin copper film, a nickel thin film, a stainless-steel thin film, a titanium thin film, a nickel foam, a copper foam, a polymer substrate coated with a conductive metal, or a combination thereof, and/or wherein the dry electrode portion (300) comprises a positive active material, and
wherein the electrode substrate (100) and the bonding reinforcement portion (200) comprise aluminum.

10. A method of manufacturing an electrode structure of any of the preceding claims, the method comprising:
preparing an electrode substrate (100);
forming a bonding reinforcement portion (300) for reinforcing bonding force of the electrode substrate by processing an upper surface of the electrode substrate; and
bonding a dry electrode portion (200) onto the electrode substrate in direct contact with the bonding reinforcement portion.

11. The method as claimed in claim 10, wherein the forming of the bonding reinforcement portion (200) comprises:
forming plating seeds on the upper surface of the electrode substrate; and
forming protrusions having a plating height from the upper surface by precipitating a plating metal material on the plating seeds by a plating process, and/or wherein adjacent ones of the plating seeds have a gap of 1 µm to 5 µm.

12. The method as claimed in claim 11, wherein the plating height is 1 µm to 5 µm.

13. The method as claimed in any of claims 10 to 12, wherein the forming of the bonding reinforcement portion (200) comprises:
forming a mask pattern on the upper surface of the electrode substrate;
forming trenches having a line shape and spaced apart a gap from each other by partially removing the electrode substrate by an etching process using the mask pattern as an etching mask; and
forming a line pattern comprising the trenches and remaining substrate portions by removing the mask pattern from the electrode substrate.

14. The method as claimed in claim 13, wherein the forming of the mask pattern comprises:
forming a photoresist film on the electrode substrate;
performing an exposure process to the photoresist film to have the line shape; and
developing the photoresist film.

15. The method as claimed in any of claims 10 to 14, further comprising forming the dry electrode portion (300) by repeating a calendaring process on electrode powder in which an electrode active material, a conductive material, and a binder are mixed, and/or wherein the bonding of the dry electrode portion onto the electrode substrate comprises a laminating process of thermally pressing the electrode substrate and the dry electrode portion by feeding the electrode substrate and the dry electrode portion between a pair of lamination rollers.
